# EUROPÄISCHE PATENTSCHRIFT

(11) **EP 3 490 808 B1**
(45) Veröffentlichungstag und Bekanntmachung des Hinweises auf die Patenterteilung: **02.09.2020**
(21) Anmeldenummer: 17742736.6
(22) Anmeldetag: 21.07.2017
(51) Int. Cl.: B42D 25/23, G02B 5/18, B42D 25/45, B42D 25/328

(54) **MINDESTENS EIN DIFFRAKTIONSELEMENT AUFWEISENDES POLYMERLAMINAT UND VERFAHREN ZU DESSEN HERSTELLUNG**
POLYMER LAMINATE COMPRISING AT LEAST ONE DIFFRACTION ELEMENT AND METHOD FOR PRODUCING IT
STRATIFIÉ POLYMÈRE COMPRENANT AU MOINS UN ÉLÉMENT DE DIFFRACTION ET PROCÉDÉ POUR SA FABRICATION

(30) Priorität: 29.07.2016 DE 102016214070
(43) Veröffentlichungstag der Anmeldung: 05.06.2019
(73) Patentinhaber: Bundesdruckerei GmbH, 10969 Berlin (DE); Covestro Deutschland AG, 51373 Leverkusen (DE)
(72) Erfinder: LEOPOLD, André, 10119 Berlin (DE); KULIKOVSKA, Olga, 14165 Berlin (DE); KLÜNDER, Kathrin, 10997 Berlin (DE); PAESCHKE, Manfred, 16348 Wandlitz (DE); ORSELLI, Enrico, 50677 Köln (DE); RÖLLE, Thomas, 51381 Leverkusen (DE); HOVESTADT, Wieland, 42799 Leichlingen (DE); HÖNEL, Dennis, 53909 Zülpich (DE)
(74) Vertreter: Patentanwälte Bressel und Partner mbB
(86) Internationale Anmeldenummer: PCT/EP2017/068444
(87) Internationale Veröffentlichungsnummer: WO 2018/019709

(56) Entgegenhaltungen:
- EP-A1- 2 730 407
- WO-A1-2009/056351
- DE-A1-102010 034 793

## Beschreibung

### Gebiet der Erfindung

Die vorliegende Erfindung bezieht sich auf ein Polymerlaminat, das mit einem oder mehreren Diffraktionselementen, beispielsweise einem oder mehreren Volumenhologrammen, ausgestattet ist, sowie auf ein Herstellverfahren für Polymerlaminate mit Diffraktionselementen. Derartige Polymerlaminate werden vorzugsweise für die Herstellung von Wert- oder Sicherheitsprodukten, beispielsweise Wert- oder Sicherheitsdokumenten, verwendet.

### Stand der Technik und Hintergrund der Erfindung:

Wert- oder Sicherheitsprodukte, insbesondere Wert- oder Sicherheitsdokumente, dienen dazu, die Identität einer Person, beispielsweise beim Übertritt einer Landesgrenze, oder die Identität oder Sache oder einen Anspruch, beispielsweise auf Zahlung eines Geldbetrages oder auf Herausgabe eines Verkaufsproduktes oder Erbringung einer Dienstleistung, zu verifizieren. Die Wert- oder Sicherheitsprodukte weisen unter anderem visuell erkennbare Merkmale auf, die sie eindeutig der Person und/oder der Sache und/oder einem Geld- oder Wertpapierkonto zuordnen und die nur dem Inhaber erlauben, sich auszuweisen bzw. über die Sache bzw. das Konto zu verfügen und beispielsweise Geldtransfers zu veranlassen. Aus diesem Grunde müssen die Wert- oder Sicherheitsprodukte gegen Missbrauch geschützt werden. Hierzu ist sicherzustellen, dass das Wert- oder Sicherheitsprodukt nicht oder nur mit erheblichem Aufwand imitiert, gefälscht oder verfälscht werden kann. Das Wert- oder Sicherheitsprodukt enthält daher Sicherheitsmerkmale, deren Nachahmung äußerst schwierig oder sogar praktisch unmöglich ist. Beispielsweise besteht es wie im Falle von Banknoten aus einem nicht ohne weiteres verfügbaren Material. Zusätzlich oder alternativ können Sicherheitsmerkmale durch spezielle Farben, beispielsweise lumineszierende oder optisch variable Farben, optische Elemente, wie Hologramme, Kippbilder, kinegraphische Objekte, Linsen- oder Prismenarrays, ferner Guillochen, Melierfasern, Sicherheitsfäden und andere, gebildet sein. Des Weiteren ist es auch erforderlich, dass die Wert- oder Sicherheitsprodukte einfach herstellbar sind.

Beispielsweise können optische Sicherheitsmerkmale in Form von Sicherheitselementen separat hergestellt und dann als Patches, Lagen, Sicherheitsfäden, Sicherheitsstreifen oder dergleichen auf eine außenliegende Oberfläche auf einem Wert- oder Sicherheitsdokument aufgeklebt oder auf eine innenliegende Oberfläche in dem Wert- oder Sicherheitsdokument eingeklebt werden. Derartige Sicherheitselemente können optisch variable Elemente sein, sodass damit erzeugte visuell wahrnehmbare Erscheinungen je nach dem Winkel, unter dem das Wert- oder Sicherheitsprodukt betrachtet wird, entweder erkennbar sind und/oder unterschiedliche Gestalt annehmen können.

Beispielsweise ergibt sich aus DE 10 2009 007 552 A1, dass Wert- oder Sicherheitsdokumente beispielsweise mit einem auf holographischem, insbesondere volumenholographischem, Wege hergestellten Sicherheitsmerkmal versehen sein können. DE 10 2009 007 552 A1 offenbart ein Verfahren zur Herstellung von mehrlagigen Sicherheitsprodukten, die zumindest aus einer Karte und zumindest einem auf zumindest einer Seite der Karte aus einem Laminat aufgebrachten Polymerfolie bestehen, wobei die Polymerfolie als Rollenware bereitgestellt wird und mit mindestens einem personalisierten Sicherheitsmerkmal versehen ist. Die Rollenbahn der Polymerfolie kann individualisiert sein und beispielsweise Hologramme enthalten.

Aus der DE 10 2010 034 793 A1 ist ein Dokument mit einem Hologramm als Sicherheitsmerkmal bestehend aus einem Polycarbonat-Körper, in dem ein Volumenhologrammlabel eingebettet ist, bekannt.

Die WO 2009/056351 A1 beschreibt ein Verfahren zum Herstellen eines Polymerschichtverbunds sowie einen Polymerschichtverbund, der insbesondere als Sicherheits- und/oder Wertdokument ausgestaltet ist. Das Verfahren umfasst die Schritte: Bereitstellen von mehreren Polymerschichten als die Substratschichten, Drucken einer ersten personalisierenden Informationen auf mindestens eine Substratschicht, Zusammentragen der Substratschichten zu einem Substratschichtenstapel und Laminieren der Substratschichten zu dem Polymehrschichtverbund, wobei die erste personalisierende Information in mindestens zwei Druckauszüge zerlegt wird, und die mindestens zwei Druckauszüge auf mindestens zwei unterschiedliche Substratschichtoberflächen gedruckt werden, so dass die gedruckten Druckauszüge in dem Polymerschichtverbund passgenau übereinander liegen und gemeinsam die erste personalisierende Information wiedergeben.

Die EP 2 730 407 A1 beschreibt eine Vorrichtung und ein Verfahren zum Herstellen eines mehrlagigen Sicherheitsprodukts, bei dem zwei individualisierte Laminationslagen auf einen Trägerkörper laminiert werden.

Ein neuartiges holographisches Aufzeichnungsmaterial ist in "Holographic recording aspects of high-resolution Bayfol® HX photopolymer", Proc. of SPIE, Vol. 7959 79570H-1 von H.Berneth, F.-K.Bruder, T.Fäcke, R.Hagen, D.Hönel, D.Jurbergs, T.Rölle, M.-S.Weiser beschrieben worden. Dieses Material dient zur Herstellung von Volumenhologrammen und kommt ohne chemische oder thermische Prozessierung aus. Das Photopolymer wird aus einem polymeren Netzwerk mit darin gelöster Chemie zum Einschreiben der holographischen Informationen gebildet. Es wird mit Laserlicht im Spektralbereich von 440 nm bis 660 nm belichtet. Das Photopolymer wird in einem dreilagigen Film zwischen einer entfernbaren Schutzfolie aus Polyethylen und einer Polyethylenterephthalatfolie als Substrat verwendet.

Die Vielzahl von Verarbeitungsschritten bei der Herstellung von Identifikationsdokumenten (ID-Dokumenten) führt zu einem komplexen Fertigungsfluss bei dem Herstellverfahren. Wesentliche Schritte im Herstellprozess sind das Herstellen von mit Sicherheitsmerkmalen versehenen Polymerlagen, das Zusammentragen der mit Sicherheitsmerkmalen versehenen Polymerlagen und weiterer Polymerlagen zu einem Stapel, das Laminieren des Stapels zu einem Laminat, das Herstellen eines Hologramms und das Verbinden des Hologramms mit dem Laminat. Da die Schritte nacheinander durchgeführt werden, wird eine erhebliche Zeit für die Herstellung eines Dokuments benötigt. Außerdem sind die Schritte aufwändig und damit fehleranfällig. Es hat sich auch herausgestellt, dass die Integration der Herstellung der personalisierten Hologramme in den Gesamtherstellprozess ungünstig ist. Damit ergibt sich ein sehr nachteiliger zeitlicher Ablauf des Fertigungsprozesses, der wegen der erforderlichen exakten Zuordnung personalisierter Substrate (Laminate) und Hologrammelemente zueinander eine komplexe Logistik erfordern. Schließlich sind auch komplizierte und damit teure und aufwändige Anlagen für die Herstellung erforderlich.

### Der Erfindung zugrunde liegende Aufgaben:

Somit besteht eine der vorliegenden Erfindung zugrunde liegende Aufgabe darin, ein Herstellverfahren für Wert- oder Sicherheitsprodukte, insbesondere Wert- oder Sicherheitsdokumente, mit Diffraktionselementen, insbesondere Hologrammelementen, zu finden, bei dem sich die vorgenannten Nachteile nicht einstellen und das insbesondere einfacher und weniger komplex als die bekannten Verfahren ist. Außerdem soll das Verfahren geringere Anforderungen an die Logistik bei dessen Durchführung stellen, sodass eine sichere Zuordnung verschiedener individualisierter Bestandteile eines Wert- oder Sicherheitsprodukts ermöglicht wird. Damit soll auch ein problemloser zeitlicher Verlauf des Verfahrens einschließlich der Produktion von Diffraktionselementen ermöglicht werden.

### Definitionen der gemäß der vorliegenden Erfindung verwendeten Begriffe:

Soweit nachfolgend jeweils Begriffe in der Singularform verwendet werden, beispielsweise Diffraktionselement', Polymerlage, Sicherheitsmerkmal usw., so können darunter jeweils auch die entsprechenden Pluralformen zu verstehen sein, nämlich 'Diffraktionselemente', 'Polymerlagen', 'Sicherheitsmerkmale' usw., und umgekehrt, sofern nicht ausdrücklich etwas anderes angegeben ist.

Soweit in der Beschreibung und in den Ansprüchen der vorliegenden Anmeldung der Begriff 'Wert- oder Sicherheitsprodukt', das insbesondere ein Wert- oder Sicherheitsdokument oder ein Sicherheitselement sein kann, verwendet wird, ist darunter beispielsweise ein Personalausweis, Führerschein, ein Zugangskontrollausweis oder ein anderes ID-Dokument, beispielsweise eine Identifikationskarte (ID-Karte), ein Fahrzeugschein, eine Scheck-, Bank-, Kredit- oder Barzahlungskarte, Kundenkarte, Gesundheitskarte, ein Firmenausweis, Berechtigungsnachweis, Mitgliedsausweis, Geschenk- oder Einkaufsgutschein oder ein sonstiger Berechtigungsnachweis oder noch ein anderes Wert- oder Sicherheitsdokument zu verstehen. Ein erfindungsgemäßes Wert- oder Sicherheitsprodukt kann auch ein Wert- oder Sicherheitselement, beispielsweise ein Aufkleber, Haftetikett (beispielsweise zur Artikelsicherung), Patch oder dergleichen, sein, das ein Diffraktionselement gemäß der vorliegenden Erfindung aufweist und das mit einem Vorprodukt eines Wert- oder Sicherheitsdokuments (Polymerlaminat) oder eines anderen Artikels, beispielsweise mit einem zu markierenden Verkaufsprodukt, dessen Echtheit zu garantieren ist, unlösbar verbunden werden kann, um das Wert- oder Sicherheitsdokument oder diesen markierten Artikel zu bilden. Dieser Artikel kann beispielsweise ein Exemplar aus einer limitierten Serie gleichartiger Gegenstände sein, deren Exklusivität mittels einer Nummerierung dokumentiert wird. Diese Nummerierung kann durch die Individualisierung des mit dem Diffraktionselement versehenen Wert- oder Sicherheitselements realisiert werden. Das Wert- oder Sicherheitsprodukt kann insbesondere eine Smartcard sein, wenn das Produkt in Kartenform vorliegt. Das Wert- oder Sicherheitsprodukt kann im Format ID-1, ID-2, ID-3, ID-T oder in irgendeinem anderen normierten oder nicht normierten Format vorliegen, beispielsweise in Kartenform. Hierzu wird auf die einschlägige Norm ISO/IEC 7810 in der am Prioritätstag dieser Anmeldung gültigen Fassung hingewiesen. Vorzugsweise ist das Format des Wert- oder Sicherheitsprodukts ID-1. Das Wert- oder Sicherheitsprodukt soll den normierten Anforderungen genügen, beispielsweise ISO 10373, ISO/IEC 7810, ISO 14443 sowie gegebenenfalls der noch im Entwurf befindlichen Norm ISO/DIS 18328-2 in den am Prioritätstag dieser Anmeldung jeweils gültigen Fassungen.

Das Wert- oder Sicherheitsprodukt kann aus einem Polymer gebildet sein, das ausgewählt ist aus einer Gruppe, umfassend Polycarbonat (PC), insbesondere Bisphenol A-Polycarbonat, Polyethylenterephthalat (PET), deren Derivate, wie Glykol-modifiziertes PET (PETG), Polyethylennaphthalat (PEN), Polyvinylchlorid (PVC), Polyvinylbutyral (PVB), Polymethylmethacrylat (PMMA), Polyimid (PI), Polyvinylalkohol (PVA), Polystyrol (PS), Polyvinylphenol (PVP), Polypropylen (PP), Polyethylen (PE), thermoplastische Elastomere (TPE), insbesondere thermoplastisches Polyurethan (TPU), Acrylnitril-Butadien-Styrol-Copolymer (ABS) sowie deren Derivate, oder Papier oder Pappe oder Glas oder Metall oder Keramik. Außerdem kann das Produkt auch aus mehreren dieser Materialien hergestellt sein. Bevorzugt besteht es aus PC oder PC/TPU/PC. Die Polymere können entweder gefüllt oder ungefüllt vorliegen. Im letzteren Falle sind sie vorzugsweise transparent oder transluzent. Falls die Polymere gefüllt sind, sind sie opak. Bevorzugt wird das Produkt aus 3 bis 12 Folien, vorzugsweise 4 bis 10 Folien, hergestellt. Die Folien können ferner Druckschichten tragen.

Soweit in der Beschreibung und in den Ansprüchen der vorliegenden Anmeldung die Begriffe 'individualisierend', 'individualisiert, personalisierend und 'personalisiert' verwendet werden, so ist darunter zu verstehen, dass sich das Wert- oder Sicherheitsprodukt, auf das sich der Begriff bezieht, von anderen Wert- oder Sicherheitsprodukten unterscheidet und dieses Wert- oder Sicherheitsprodukt einer Entität (im Falle der Begriffe 'individualisierend' oder 'individualisiert'), insbesondere einer Person (im Falle der Begriffe 'personalisierend' oder 'personalisiert'), zugeordnet ist. Das Wert- oder Sicherheitsprodukt kann anstelle einer Person auch einer Sache, wie einem Kraftfahrzeug, Verkaufsprodukt (in diesem Falle ist das Wert- oder Sicherheitsprodukt beispielsweise ein Etikett, Label, Anhänger oder Aufkleber) oder einem Wertpapier, zugeordnet werden. Durch die Individualisierung bzw. Personalisierung erkennt ein Dritter die eindeutige Zuordnung des Wert- oder Sicherheitsprodukts zu der Entität oder zu Gruppen von gleichartigen oder ähnlichen Entitäten.

### Grundzüge der Erfindung und bevorzugte Ausführungsformen:

Der Erfindung liegt der Erfindungsgedanke zugrunde, statt des bisherigen Verfahrens des Verklebens eines fertig gestellten Hologrammelements oder anderen Diffraktionselements mit einem Rohling für ein Wert- oder Sicherheitsprodukt, insbesondere für ein Wert- oder Sicherheitsdokument, ein Herstellverfahren anzuwenden, bei dem das Diffraktionselement zusammen mit den übrigen Laminatbestandteilen des Polymerlaminats dem Laminationsverfahren unterworfen wird, d.h. das Diffraktionselement wird ebenso wie die übrigen Lagen des Laminats als Lage beim Laminieren eingesetzt und auf diese Weise mit den übrigen Lagen verbunden. Auf einen separaten Klebeschritt kann daher verzichtet werden.

Somit werden die vorgenannten Aufgaben gemäß einem ersten Aspekt der vorliegenden Erfindung mit einem Verfahren zum Herstellen eines mindestens ein Diffraktionselement aufweisenden Polymerlaminats gelöst. Das Verfahren umfasst zumindest die folgenden Verfahrensschritte:
(a) Bereitstellen eines Diffraktionselement-Materials und mindestens einer Polymerlage, wobei das Diffraktionselement-Material eine Trägerfolie und eine sich darauf befindende lichtempfindliche Schicht aufweist;
(b) Herstellen des mindestens einen Diffraktionselements durch Erzeugen einer lichtbeugenden Schicht aus der lichtempfindlichen Schicht, indem ein lichtbeugendes Muster in der lichtempfindlichen Schicht des mindestens einen Diffraktionselement-Materials erzeugt wird;
(c) Zusammentragen des mindestens einen Diffraktionselements und mindestens einer Polymerlage zu einem Lagenstapel; und
(d) flächiges Verbinden des mindestens einen Diffraktionselements und der mindestens einen Polymerlage mit einem Laminierverfahren unter Ausbildung des Polymerlaminats.

Gemäß einem zweiten Aspekt der vorliegenden Erfindung wird auch ein Polymerlaminat mit mindestens einem Diffraktionselement geschaffen, wobei das Polymerlaminat kein zusätzliches Klebermaterial zur Verbindung des mindestens einen Diffraktionselements mit den Polymerlagen des Polymerlaminats aufweist. Denn das Diffraktionselement ist durch Laminieren mit den übrigen Polymerlagen des Polymerlaminats verbunden.

Gemäß einem dritten Aspekt der vorliegenden Erfindung wird das Polymerlaminat zur (weiteren) Herstellung eines Wert- oder Sicherheitsprodukts, insbesondere eines Wert- oder Sicherheitsdokuments, verwendet, indem es als Vorprodukt für das Wert- oder Sicherheitsprodukt eingesetzt wird. Beispielsweise kann das Polymerlaminat bereits weitgehend die Sicherheitsmerkmale des Wert- oder Sicherheitsprodukts, jedoch noch nicht alle personalisierenden Daten, beispielsweise auf dessen Oberfläche, aufweisen und noch nicht endbearbeitet sein, wie mit einer Abschlusslackierung und/oder einer Kantenbearbeitung und/oder einem Einbinden in ein buchförmiges Sicherheitsdokument, wie ein Passbuch. Von daher betrifft die vorliegende Erfindung auch ein Wert- oder Sicherheitsprodukt, das mindestens ein Diffraktionselement aufweist, das ohne zusätzliches Klebermaterial zur Verbindung des mindestens einen Diffraktionselements mit Polymerlagen eines Polymerlaminats auskommt.

Durch das Einbinden des Diffraktionselements mit einem Laminierverfahren wird erreicht, dass eine feste Verbindung zwischen dem Diffraktionselement und den weiteren Lagen des Polymerlaminats geschaffen wird. Damit wird das bisher angewendete Klebeverfahren überflüssig. Dies hat den Vorteil, dass eine separate Vorrichtung zum Applizieren und nachfolgenden Verkleben des Diffraktionselements mit einem Dokumentenrohling nicht mehr benötigt wird, sodass teure Investitions-, Wartungs- und Bedienungskosten entfallen. Ein weiterer wesentlicher Vorteil des erfindungsgemäßen Verfahrens besteht auch darin, dass das Verfahren kürzer ist als das herkömmliche Verfahren, weil auf den separaten Applikations- und Klebeschritt verzichtet werden kann. Denn die Verbindung des Diffraktionselements mit den weiteren Polymerlagen wird in einem einzigen Verfahrensschritt, nämlich beim Laminierschritt, erzeugt. Außerdem stellt die Klebeverbindung gegebenenfalls eine Schwachstelle dar, an der das Dokument in mehrere Teile getrennt werden kann. Daher führt das erfindungsgemäße Verfahren zu einem Wert- oder Sicherheitsdokument, das sicherer gegen Fälschung und Verfälschung ist als herkömmliche Dokumente.

Mit dem Verfahren wird auch ein günstigerer zeitlicher Ablauf bei der Herstellung der Polymerlaminate erreicht, weil gegebenenfalls bereits individualisierte Polymerlagen mit einem ebenfalls individualisierten Diffraktionselement einfach und sicher zusammengetragen und dann in dem Laminierschritt miteinander verbunden werden können. Diese Vorgehensweise ermöglicht beispielsweise, dass die Herstellung des Diffraktionselements zeitgleich mit der Herstellung von Sicherheitsmerkmalen auf einer oder mehreren übrigen Polymerlagen stattfinden kann, beispielsweise eines personalisierenden Druckes auf einer der Polymerlagen, wie eines Passbildes. Da beide Elemente, das Diffraktionselement und diese anderen Sicherheitsmerkmale, jeweils individualisiert sein können, können solche Elemente mit derselben Individualisierung jeweils paarweise hergestellt und dann zusammengetragen werden. Dies ermöglicht einen günstigen Produktionsfluss und eine sicherere Zuordnung der einzelnen Bestandteile eines Polymerlaminats zueinander als mit konventionellen Verfahren.

Des Weiteren unterscheidet sich das vorliegende Diffraktionselement-Material auch hinsichtlich des Aufbaus von herkömmlichen Materialien zum Herstellen von Diffraktionselementen: Das im Herstellverfahren gemäß der vorliegenden Erfindung einsetzbare Material weist einseitig eine Trägerfolie auf, die die Funktion hat, beim Laminieren als Bestandteil in das Polymerlaminat einlaminiert zu werden. Daher wird diese Folie vor dem Verbinden mit den Polymerlagen von der lichtempfindlichen Schicht nicht entfernt. Dagegen müssen im Falle herkömmlicher Materialien Schutzfolien von beiden Seiten der lichtempfindlichen Schicht abgezogen werden. Dies erfordert einen zusätzlichen Arbeitsschritt.

In einer Ausführungsalternative der vorliegenden Erfindung umfasst Verfahrensschritt (c) das Anordnen der Trägerfolie an der Seite der lichtbeugenden Schicht des mindestens einen Diffraktionselements in dem Lagenstapel, die der mindestens einen Polymerlage gegenüberliegt, sodass die lichtbeugende Schicht von der Außenseite aus gesehen unter der Trägerfolie liegt. In dieser Ausführungsalternative kann die Trägerfolie in Form einer Prägefolie ausgebildet sein oder werden, sodass sich an Verfahrensschritt (d) folgender Verfahrensschritt anschließt: (e) Einprägen von mikrooptischen Elementen in das Material der Prägefolie. Die Trägerfolie wird in Verfahrensschritt (c) somit an einer Außenseite des Lagenstapels angeordnet. Die mikrooptischen Elemente können in einer Matrix angeordnet sein. Die mikrooptischen Elemente können beispielsweise Mikrolinsen oder Mikroprismen sein, die in Matrices (Arrays) angeordnet sind. Solche Anordnungen sind aus dem Stand der Technik bekannt (siehe hierzu beispielsweise EP 1 953 002 A2).

Dazu alternativ kann Verfahrensschritt (c) das zusätzliche Anordnen einer separaten Prägefolie an der Seite des Lagenstapels, an der sich das mindestens eine Diffraktionselement befindet, umfassen. Diese Ausführungsform ist dann besonders bevorzugt, wenn sich an der Außenseite des Lagenstapels keine Schutzfolie des Diffraktionselement-Materials befindet und wenn sich die lichtbeugende Schicht auf der Seite der Trägerfolie des mindestens einen Diffraktionselements in dem Lagenstapel befindet, die der mindestens einen Polymerlage gegenüberliegt. Somit liegt die lichtbeugende Schicht bis auf die Prägefolie auf der Außenseite des Polymerlaminats, sofern nicht noch weitere Bestandteile, wie die Kratzschutzschicht, außenseitig aufgebracht sind oder werden. Auch dies führt zu einer guten Sichtbarkeit des durch die lichtbeugende Schicht vermittelten optischen Effekts. Außerdem vermittelt die Trägerfolie die Haftfestigkeit des Diffraktionselements zu den übrigen Polymerlagen. Auch in diesem Falle schließt sich an Verfahrensschritt (d) folgender Verfahrensschritt an: (e) Einprägen von mikrooptischen Elementen in das Material der Prägefolie. Die mikrooptischen Elemente können in Matrices angeordnet sein.

Das Prägeverfahren kann beim Laminieren gemäß Verfahrensschritt (d) mit Prägeblechen durchgeführt werden, die als Pressbleche eingesetzt werden. Hierzu weisen die Prägebleche an der Stelle Vertiefungen und/oder Erhebungen auf, die der gewünschten Stelle für die Erzeugung der mikrooptischen Elemente entspricht. Beispielsweise haben Vertiefungen die Form von Mikrolinsen oder Mikroprismen oder von noch anderen mikrooptischen Elementen, allerdings in Form der entsprechenden Negativstrukturen dieser Elemente. Beim Laminieren formt sich dann die Struktur der mikrooptischen Elemente in der Oberfläche des Materials der Prägefolie ab.

Eine separate Prägefolie, die nicht durch die Trägerfolie gebildet ist, kann aus einem der Materialien gebildet sein, aus dem auch die Polymerlagen gebildet sind. Von daher kommen grundsätzlich alle Materialien in Betracht, aus denen ein Wert- oder Sicherheitsprodukt hergestellt sein kann. Vorzugsweise ist die Prägefolie mit PC gebildet, d.h. sie besteht aus PC oder enthält PC und ein oder mehrere weitere Materialien. Die Prägefolie kann eine Dicke vorzugsweise von mindestens 15 µm, weiter bevorzugt von mindestens 25 µm und am meisten bevorzugt von mindestens 40 µm haben. Die Dicke der Prägefolie kann ferner eine Dicke von höchstens 300 µm, vorzugsweise von höchstens 200 µm und am meisten bevorzugt von höchstens 80 µm haben. Das Material der Prägefolie kann transparent oder transluzent, d.h. durchscheinend sein, ohne transparent zu sein. Ferner kann die Prägefolie farblos, d.h. im sichtbaren Spektralbereich (400 nm bis 750 nm) nicht absorbierend, oder farbig, d.h. im sichtbaren Spektralbereich absorbierend, sein. Falls das Prägefolien-Material einen Farbstoff enthält, ist es zwar transparent oder transluzent, kann jedoch farbig erscheinen.

Das Diffraktionselement ist vorzugsweise ein Element mit einem Volumenhologramm, kann aber auch ein Element mit einem anderen Beugungsmuster sein, beispielsweise mit einem Reflexionshologramm, Kinegram® oder einer anderen diffraktiven Struktur, beispielsweise mit Blazestrukturen, mit einem Lineargitter, mit asymmetrischen oder symmetrischen Gitterstrukturen oder mit Beugungsstrukturen nullter Ordnung, mit einem Kreuzgitter oder Hexagonalgitter oder dergleichen.

Das Diffraktionselement-Material enthält eine lichtempfindliche Schicht. Derartige Schichten sind allgemein bekannt und für den angegebenen Verwendungszweck üblich. Es handelt sich um eine Schicht aus oder mit einem Photopolymer. Zur Herstellung des Diffraktionselements aus dem Diffraktionselement-Material wird die lichtempfindliche Schicht dieses Elements in üblicher Art und Weise belichtet und das entstandene lichtbeugende Muster in der Schicht anschließend fixiert (beispielsweise mittels UV-Strahlung). Die lichtempfindliche Schicht ist vorzugsweise über einen thermischen Reaktivklebstoff mit der Trägerfolie verbunden. Die Diffraktionselemente werden entweder in Rollenform oder in Blattform und in letzterem Falle in Einzel- oder Mehrfachnutzen hergestellt. Vorteilhaft ist eine Herstellung in Rollenform und anschließende Vereinzelung in Einzelnutzen, die dann mit den weiteren Lagen in Verfahrensschritt (c) zusammengetragen werden.

In einer bevorzugten Ausführungsform der vorliegenden Erfindung ist die Trägerfolie des Diffraktionselements mit PC gebildet, oder sie besteht aus PC. Grundsätzlich kommen für das Material der Trägerfolie aber alle Materialien in Betracht, aus denen ein Wert- oder Sicherheitsprodukt hergestellt sein kann. Insbesondere bevorzugt ist es jedoch, wenn die Trägerfolie vollständig aus PC besteht. Falls die Trägerfolie dagegen nicht vollständig aus PC besteht, kann das Folienmaterial ein Polymerblend mit weiteren Polymeren, beispielsweise mit ABS, sein. Diese Folie kann eine Dicke vorzugsweise von mindestens 15 µm, weiter bevorzugt von mindestens 25 µm und am meisten bevorzugt von mindestens 40 µm haben. Die Trägerfolie kann ferner eine Dicke von höchstens 300 µm, vorzugsweise von höchstens 200 µm und am meisten bevorzugt von höchstens 80 µm haben. Das Material der Trägerfolie kann transparent oder transluzent, d.h. durchscheinend, ohne transparent zu sein, oder opak sein. Ferner kann die Trägerfolie farblos, d.h. im sichtbaren Spektralbereich (400 nm bis 750 nm) nicht absorbierend, oder farbig, d.h. im sichtbaren Spektralbereich absorbierend, sein. Wenn die Trägerfolie opak ist, kann das Trägerfolien-Material mit einem Pigment gefüllt sein. Falls das Material einen Farbstoff enthält, kann es zwar transparent oder transluzent sein, jedoch farbig erscheinen.

In einer weiteren bevorzugten Ausführungsform der vorliegenden Erfindung kann das Diffraktionselement-Material zusätzlich eine Kratzschutzschicht aufweisen, die auf der der Trägerfolie gegenüber liegenden Seite der lichtempfindlichen Schicht angeordnet ist. Die Kratzschutzschicht kann aus einem mechanisch widerstandsfähigen Polymer gebildet sein, beispielsweise aus PET oder aus einem anderen Material, das üblicherweise für die Herstellung von Wert- oder Sicherheitsdokumenten verwendet wird. Die Kratzschutzschicht kann vorzugsweise eine Dicke von mindestens 1 µm, weiter bevorzugt von mindestens 2 µm und am meisten bevorzugt von mindestens 3 µm haben. Die Dicke kann vorzugsweise höchstens 20 µm, weiter bevorzugt höchstens 12 µm und am meisten bevorzugt höchstens 7 µm betragen. Das Material der Kratzschutzschicht ist vorzugsweise transparent oder transluzent, d.h. durchscheinend, ohne transparent zu sein. Ferner kann die Kratzschutzschicht entweder farblos, d.h. im sichtbaren Spektralbereich (400 nm bis 750 nm) nicht absorbierend, oder farbig, d.h. im sichtbaren Spektralbereich absorbierend, sein. Falls das Material der Kratzschutzschicht einen Farbstoff enthält, kann es zwar transparent oder transluzent sein, jedoch farbig erscheinen.

In noch einer weiteren bevorzugten Ausführungsform der vorliegenden Erfindung umfassen die Verfahrensschritte (c) und (d), dass die Kratzschutzschicht als Bestandteil des herzustellenden Polymerlaminats auf der lichtbeugenden Schicht verbleibt. Demnach wird die Kratzschutzschicht in dieser Ausführungsform vor dem Verfahrensschritt (c) von dem Diffraktionselement nicht entfernt, beispielsweise abgezogen.

Die Kratzschutzschicht verleiht dem Diffraktionselement die erforderlichen Gebrauchseigenschaften, d.h. einen Schutz der lichtbeugenden Schicht beispielsweise gegen mechanische Beschädigung und einen Schutz gegen chemische Beeinträchtigungen, beispielsweise gegen Chemikalien, wie Lösungs- und Quellmittel. Dieser Schutz ist wirksamer als ein durch herkömmliche Schutzlacke bewirkter Schutz, wenn die Kratzschutzschicht beispielsweise aus PET besteht oder dieses Material enthält. Dies ist insbesondere dann von Vorteil, wenn über der lichtbeugenden Schicht keine weitere Polymerlage, wie eine Polymerfolie oder eine Polymerlackschicht, angeordnet wird, die für diesen Schutz sorgen würde.

Das Diffraktionselement kann die gesamte Fläche des Polymerlaminats, vorzugsweise auch die gesamte Fläche des Wert- oder Sicherheitsproduktes, insbesondere Wert- oder Sicherheitsdokuments, einnehmen oder nur einen Teil davon. Beispielsweise kann das Diffraktionselement ein Hologramm enthalten, das nur einen Teil der Fläche des Laminats bzw. des Wert- oder Sicherheitsprodukts bzw. des Wert- oder Sicherheitsdokuments einnimmt. Falls das Hologramm die Wiedergabe des Gesichtsbildes des Dokumenteninhabers ist, kann das Diffraktionselement kleiner als die Fläche des Polymerlaminats und auch kleiner als die Fläche des Wert- oder Sicherheitsprodukts bzw. des Wert- oder Sicherheitsdokuments sein. In einer alternativen Ausführungsform kann das Diffraktionselement einen Sicherheitsfaden oder ein Element mit einem anderen Format als einem Faden bilden und von daher nur einen (kleinen) Bruchteil der Fläche des Wert- oder Sicherheitsprodukts bzw. des Wert- oder Sicherheitsdokuments einnehmen.

In einer bevorzugten Ausführungsform der vorliegenden Erfindung kann mindestens eine der Polymerlagen, die zusammen mit dem Diffraktionselement den Lagenstapel bildet, mit PC gebildet sein oder daraus bestehen. Grundsätzlich kommen für das Material der Polymerlagen aber alle Materialien in Betracht, aus denen ein Wert- oder Sicherheitsprodukt hergestellt sein kann. Insbesondere bevorzugt ist es jedoch, wenn diese Polymerlagen vollständig aus PC bestehen. Falls die Polymerlagen dagegen nicht vollständig aus PC bestehen, können sie beispielsweise aus einem Polymerblend mit weiteren Polymeren, beispielsweise mit ABS, gebildet sein. Die Polymerlagen können eine beliebige Dicke innerhalb der durch das herzustellende Wert- oder Sicherheitsprodukt gezogenen Grenzen haben. Vorzugsweise beträgt die Dicke jedoch jeweils mindestens 25 µm, weiter bevorzugt mindestens 40 µm und am meisten bevorzugt mindestens 50 µm. Die Polymerlagen können ferner jeweils eine Dicke von höchstens 300 µm, vorzugsweise von höchstens 200 µm und am meisten bevorzugt von höchstens 100 µm haben. Das Material der Polymerlagen kann transparent oder transluzent, d.h. durchscheinend, ohne transparent zu sein, oder opak sein. Ferner können die Polymerlagen farblos, d.h. im sichtbaren Spektralbereich (400 nm bis 750 nm) nicht absorbierend, oder farbig, d.h. im sichtbaren Spektralbereich absorbierend, sein. Wenn die Polymerlagen opak sind, kann das Polymerlagen-Material mit einem Pigment gefüllt sein. Falls das Material einen Farbstoff enthält, kann es zwar transparent oder transluzent sein, jedoch farbig erscheinen.

In noch einer weiteren bevorzugten Ausführungsform der vorliegenden Erfindung umfasst Verfahrensschritt (c) das Anordnen des mindestens einen Diffraktionselements an einer Außenseite des Lagenstapels. Damit wird gewährleistet, dass der durch die lichtbeugende Schicht vermittelte optische Effekt gut sichtbar ist.

In noch einer weiteren bevorzugten Ausführungsform der vorliegenden Erfindung weist das Diffraktionselement-Material eine Schutzfolie auf, die auf der der Trägerfolie gegenüber liegenden Seite der lichtempfindlichen Schicht in dem Diffraktionselement-Material angeordnet ist. Somit liegt die Schutzfolie vorzugsweise direkt oder gegebenenfalls über die Kratzschutzschicht an der lichtempfindlichen bzw. lichtbeugenden Schicht oder gegebenenfalls an der Kratzschutzschicht an. Diese Folie dient dazu, die lichtempfindliche Schicht und, nach deren Herstellung, die lichtbeugende Schicht gegen mechanische Beschädigungen, Verunreinigungen, wie Staub, und chemische Einwirkungen, beispielsweise Lösungs- oder Quellmittel, zu schützen. Dieser Schutz ist wirksamer als ein durch herkömmliche Schutzlacke bewirkter Schutz. Die Schutzfolie kann durch ein leicht abziehbares Material gebildet sein, beispielsweise aus einem Siliconpolymer oder aus PE. Sie kann eine Dicke vorzugsweise von mindestens 8 µm, weiter bevorzugt von mindestens 12 µm und am meisten bevorzugt von mindestens 15 µm haben. Die Dicke der Schutzfolie kann ferner eine Dicke von höchstens 100 µm, vorzugsweise von höchstens 50 µm und am meisten bevorzugt von höchstens 30 µm haben. Die Schutzfolie schützt das Dokument gegen mechanische Beeinträchtigungen und chemische Einwirkungen, beispielsweise Lösungs- und Quellmittel.

Weist das Diffraktionselement-Material sowohl eine Kratzschutzschicht als auch eine Schutzfolie auf, so hat das Diffraktionselement-Material in einer ersten Ausführungsalternative den folgenden Aufbau: Trägerfolie, darauf lichtempfindliche Schicht, darauf Kratzschutzschicht und darauf Schutzfolie. Im Falle des Fehlens einer der genannten Bestandteile, also etwa der Schutzfolie oder der Kratzschutzschicht, ist der Aufbau entsprechend anzupassen.

Gemäß einer ersten Verfahrensvariante der letztgenannten Ausführungsform (mit Schutzfolie und gegebenenfalls Kratzschutzschicht) der vorliegenden Erfindung schließt sich an Verfahrensschritt (b) folgender Verfahrensschritt an: (b1) Abziehen der Schutzfolie von der lichtempfindlichen oder lichtbeugenden Schicht. Die Schutzfolie wird vorzugsweise unmittelbar vor dem Zusammentragen gemäß Verfahrensschritt (c) von der lichtbeugenden Schicht, gegebenenfalls von der an der lichtbeugenden Schicht anliegenden Kratzschutzschicht abgezogen, sodass eine Beeinträchtigung der lichtempfindlichen bzw. lichtbeugenden Schicht vermieden wird. Falls das Diffraktionselement-Material beispielsweise in Rollenform vorliegt, kann die Schutzfolie an einem Endabschnitt gegriffen und nach und nach von dem Material der Trägerfolie und der darauf angeordneten lichtbeugenden Schicht abgezogen werden. In diesem Falle werden aus dem Rollenmaterial nach dem Abziehen der Schutzfolie Stücke abgeschnitten, die dann dem Laminierverfahren zugeführt werden. Alternativ kann das Diffraktionselement-Material auch in Form von blattförmigem Gut in einem Format vorliegen, das für das Laminierverfahren geeignet ist und zu blattförmigen Diffraktionselementen weiterverarbeitet wird. In diesem Falle sind die Schutzfolienabschnitte auf diesen Gutstücken separat abzuziehen. Die Schutzfolie ist in diesem Falle vorzugsweise eine leicht von dem Rest des Diffraktionselement-Materials abziehbare Schutzfolie, beispielsweise aus einem Siliconpolymer.

In einer zweiten Ausführungsalternative kann das Diffraktionselement-Material den folgenden Aufbau haben: Schutzfolie, darauf lichtempfindliche Schicht und darauf Kratzschutzschicht. In diesem Falle kann zumindest auch auf die Kratzschutzschicht verzichtet werden, wenngleich diese wegen ihrer schützenden Wirkung für die lichtempfindliche Schicht vorteilhaft ist. In dieser Alternative kommt die Verwendung der Schutzfolie als Prägefolie ebenfalls in Betracht, wenn das Diffraktionselement-Material, mit der Schutzfolie zur Außenseite des Lagenstapels gewendet, in Verfahrensschritt (c) mit den Polymerlagen zusammengetragen wird.

In noch einer weiteren bevorzugten Ausführungsform der vorliegenden Anmeldung ist mindestens eine der Polymerlagen mit einer elektronischen Schaltung ausgerüstet. Die elektronische Schaltung kann beispielsweise eine Schaltung für eine Kommunikation mit einem Lesegerät aufweisen und hierzu in üblicher Art und Weise entweder eine RFID-Schaltung mit RFID-Chip und RFID-Antenne für eine kontaktlose Kommunikation mit dem Lesegerät aufweisen oder ein Chipmodul mit externen elektrischen Kontaktflächen für eine Kommunikation über elektrische Kontakte ausgerüstet sein. Außerdem oder alternativ dazu kann die elektronische Schaltung auch über ein Anzeigegerät, wie eine LED- oder OLED-Anzeige, und/oder über ein Eingabegerät, wie einen Sensor und/oder eine Tastatur, verfügen und hierzu auch eine elektronische Ansteuerungs- und Verarbeitungseinheit für diese Komponenten aufweisen. Eine der Polymerlagen kann eine Ausgleichslage sein, die Ausnehmungen und/oder Durchbrechungen an den Stellen aufweist, an denen sich ein Chip auf der Polymerlage mit der elektronischen Schaltung befindet, und an der Seite dieser Polymerlage angeordnet sein, auf der die Chips angeordnet sind.

Der Verfahrensschritt (c) des Zusammentragens des Diffraktionselements mit den Polymerlagen wird vorzugsweise in einer Vorrichtung durchgeführt, bei der die einzelnen Laminatbestandteile nacheinander aufeinander gelegt werden können. Hierzu weist diese Vorrichtung beispielsweise einen Sammelplatz auf, auf dem die Bestandteile aufeinander abgelegt werden können, sodass der Lagenstapel entsteht. Zum Zuführen der Laminatbestandteile können übliche Handhabungsvorrichtungen eingesetzt werden, beispielsweise Manipulationsroboter, wie ein SCARA-Roboter (Selective Compliance Assembly Robot Arm), oder ein Fastpicker oder ein Portalkran.

Im Anschluss an das Zusammentragen der Lagen zu dem Lagenstapel gemäß Verfahrensschritt (c) wird dieser Stapel in Verfahrensschritt (d) zu dem Polymerlaminat weiterverarbeitet. Verfahrensschritt (d) schließt insbesondere das Laminieren der einzelnen Lagen (Diffraktionselement und Polymerlagen) ein, das durch ein flächiges Verbinden unter Anwendung von Wärme- und Druckeinwirkung gekennzeichnet ist, sodass die Lagen zumindest oberflächlich erweichen und sich dadurch verbinden. Im Falle von Lagen, die aus denselben Materialien bestehen, werden auf diese Weise Verbindungen geschaffen, in denen die miteinander verbundenen Lagen in einem Querschnitt nicht mehr voneinander unterscheidbar sind, weil sie miteinander verschmolzen sind, sofern die benachbarten Lagen sehr ähnliche Brechungsindices haben und nicht Materialien an der Grenzfläche eingeschlossen werden, die eine Lokalisierung der Grenzfläche erlauben. Somit wird ein monolithischer Verbund gebildet. Es ist demnach bevorzugt, das mindestens eine Diffraktionselement und die mindestens eine Polymerlage in Verfahrensschritt (d) ohne Anwendung eines zusätzlichen Klebermaterials miteinander zu verbinden. Dadurch wird eine besonders feste Verbindung zwischen den einzelnen Lagen erreicht, die mangels eines dazwischen angeordneten Drittmaterials, nämlich eines Klebermaterials, keinesfalls mehr ohne völlige Zerstörung des Lagenzustandes des Laminats aufgehoben werden kann.

Das Laminierverfahren ist vorzugsweise ein Heiß-/Kalt-Laminierverfahren, d.h. der Lagenstapel wird unter flächiger Pressung zunächst aufgeheizt, sodass das Lagenmaterial erweicht und sich miteinander verbindet, und dann unter Aufrechterhaltung des Pressdruckes abgekühlt, sodass eine feste Verbindung der Lagen miteinander geschaffen wird. Somit kann auf separate Materialien verzichtet werden, die als zusätzliche Lagen zwischen den zu verbindenden Lagen eingelegt werden und die ausschließlich den Zweck haben, die Lagen miteinander zu verbinden (Klebermaterial).

Das Laminierverfahren wird in einer Laminiervorrichtung durchgeführt, die entweder dazu ausgebildet ist, mehrere Lagenstapel übereinander aufzunehmen (diskontinuierliche Anlage), oder die in Form einer Durchlaufanlage ausgebildet ist. In ersterem Falle ist jeder Lagenstapel außenseitig von jeweils einem Pressblech und einem Presspolster (Laminierpresswerkzeuge) eingefasst. Auf die Lagenstapel und Pressbleche wird mittels beheizbarer Pressstempel von außen Druck aufgebracht. Mittels der Pressstempel werden die Lagenstapel aufgeheizt. Die Temperatur in der Heißphase beim Laminieren kann im Bereich von 170-200 °C, vorzugsweise 180-190 °C, liegen. Während des Laminiervorganges werden die Lagenstapel zwischen den Laminierpresswerkzeugen einem Druck senkrecht zu den Oberflächen des Laminiergutstapels unterworfen. Dieser Druck soll möglichst so groß sein, dass sich eventuell zwischen den Lagen befindende Luft beim Laminieren der Lagenstapel herausgepresst wird. Der Druck in einer ersten Laminierphase (Heißphase) kann vorzugsweise in einem Bereich von 100 bis 120 N/cm² und in einer zweiten Laminierphase (Kaltphase) vorzugsweise in einem Bereich von 400 bis 500 N/cm², liegen. Im Falle von Durchlaufanlagen werden die Lagenstapel auf einem Transportweg aufeinanderfolgend nacheinander durch die Anlage transportiert, wobei jeweils Druck auf die Lagenstapel ausgeübt wird. Nach der Heißphase, in der die Lagenstapel der vorgenannten Temperatur und dem vorgenannten Druck unterworfen werden, werden sie der Kaltphase unterworfen, in der der Druck erhöht und die Temperatur auf Raumtemperatur abgesenkt werden. Im Falle der diskontinuierlichen Anlage werden diese beiden Phasen in Form eines Bearbeitungsprogrammes nacheinander abgearbeitet. Im Falle der Durchlaufanlage befinden sich in der Anlage zwei Behandlungsstrecken, in denen die Lagenstapel der Heißphase und der Kaltphase unterworfen werden.

In noch einer weiteren bevorzugten Ausführungsform der vorliegenden Erfindung wird mindestens eine der Polymerlagen mit Daten versehen. Derartige Daten können individualisierend, insbesondere personalisierend, oder auch nicht individualisierend sein. Im Falle von personalisierenden Daten kann es sich um persönliche Informationen über den Dokumenteninhaber handeln, beispielsweise um ein Passbild, den Namen, die Adresse, das Geburtsdatum oder den Geburtsort des Inhabers. Diese Daten werden vorzugsweise in Form einer Druckbildwiedergabe in alphanumerischem Format auf der Polymerlage erzeugt, beispielsweise mit einem digitalen Druckverfahren, insbesondere mit einem Tintenstrahl-Druckverfahren. Hierzu wird die Druckbildwiedergabe mittels des Druckverfahrens auf die Polymerlage gedruckt. Die Druckbildwiedergabe wird vorzugsweise auf einer Oberfläche einer der Polymerlagen erzeugt, die sich nach dem Laminieren gemäß Verfahrensschritt (d) im Inneren des Polymerlaminats befindet. Dadurch wird eine Fälschung oder Verfälschung der Daten erheblich erschwert.

In noch einer weiteren bevorzugten Ausführungsform der vorliegenden Erfindung werden die Daten auf die mindestens eine der Polymerlagen gleichzeitig mit der Herstellung des mindestens einen Diffraktionselements aus dem Diffraktionselement-Material erzeugt. Während also das Diffraktionselement gemäß dieser bevorzugten Ausführungsform hergestellt wird, wird gleichzeitig auch das die Daten enthaltende Sicherheitsmerkmal auf einer der Polymerlagen erstellt. Somit können das Diffraktionselement und die mit den Daten versehene Polymerlage praktisch gleichzeitig fertiggestellt werden, sodass der zeitliche Ablauf der Herstellung des Polymerlaminats weiter optimiert wird.

Das Wert- oder Sicherheitsprodukt kann zusätzlich zu den vorgenannten Sicherheitsmerkmalen (Diffraktionselement, Daten auf den Polymerlagen, mikrooptische Elemente) mindestens ein weiteres Sicherheitsmerkmal aufweisen, das entweder individualisierend oder nicht individualisierend ist. Als weitere Sicherheitsmerkmale kommen Guillochen, Wasserzeichen, Prägedrucke, ein Sicherheitsfaden, Mikroschrift, optisch variable Pigmente, lumineszierende Farben, Durchsichtpasser und dergleichen in Betracht.

Zur näheren Veranschaulichung der Erfindung dienen die nachfolgend beschriebenen Figuren, die die Erfindung lediglich exemplarisch illustrieren und nicht schutzbeschränkend zu verstehen sind.
- Fig. 1: zeigt eine ID-Karte in einer isometrischen Ansicht;
- Fig. 2: zeigt eine Schnittansicht der ID-Karte von Fig. 1 entlang der Schnittlinie A - A;
- Fig. 3: zeigt aufeinander folgende Verfahrensschritte für die Herstellung eines Polymerlaminats für die Herstellung der ID-Karte von Fig. 1 gemäß einer ersten Ausführungsform der vorliegenden Erfindung in Schnittansichten entlang der Schnittlinie A - A;
- Fig. 4: zeigt aufeinander folgende Verfahrensschritte bei der Herstellung eines Polymerlaminats für die Herstellung einer ID-Karte gemäß einer zweiten Ausführungsform der vorliegenden Erfindung in Schnittansichten.

Gleiche Bezugszeichen in den Figuren bezeichnen gleiche Elemente oder Elemente mit der gleichen Funktion. Die Figuren geben die Zeichnungselemente nicht maßstäblich und nicht in den natürlichen Proportionen zueinander an.

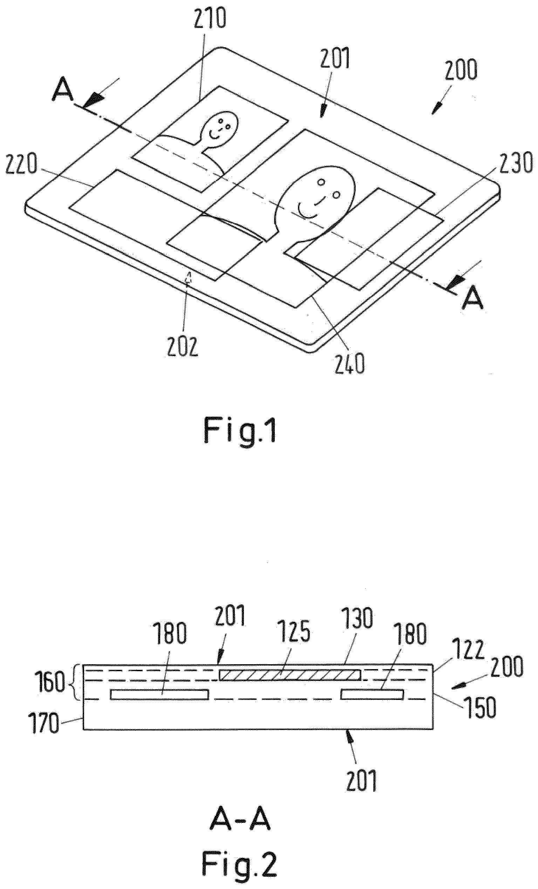

Die in Fig. 1 gezeigte ID-Karte 200 ist ein Wert- oder Sicherheitsdokument. Die Karte hat beispielsweise das Format ID 1. Sie weist eine Oberseite 201 und eine (nicht gezeigte) Unterseite 202 auf. Auf der Kartenoberseite sind ein erstes Feld 210 und ein viertes Feld 240 für ein Passphoto des Karteninhabers sowie ein zweites Feld 220 und ein drittes Feld 230 für Daten des Karteninhabers, beispielsweise Wiedergaben des Namens, Geburtsdatums und -ortes und der Wohnadresse in Klartext sowie eine Identnummer der ID-Karte, vorgesehen. Somit stellen diese Daten und Passbilder individualisierende, vorliegend personalisierende, Sicherheitsmerkmale dar. Während das Passphoto in dem ersten Feld und die in alphanumerischer Form angegebenen Daten in dem zweiten Feld und dem dritten Feld durch ein Druckverfahren hergestellt sind, beispielsweise Tintenstrahldruck, ist das Passphoto in dem vierten Feld durch ein Volumenhologramm gebildet.

Die ID-Karte 200 von Fig. 1 ist im Schnitt entlang der Schnittlinie A - A in Fig. 2 wiedergegeben. Die ID-Karte enthält eine Polymerlage 170 aus PC, die vorzugsweise opak ist. Auf die Polymerlage sind Druckschichten 180 aufgebracht, die die Druckbilder in dem ersten Feld 210 und in dem dritten Feld 230 wiedergeben. Auf der Polymerlage befindet sich ein Diffraktionselement 160 in Form eines Volumenhologramms, dass verschiedene Bestandteile aufweist, nämlich eine lichtbeugende Schicht 122, eine Trägerfolie 150 aus PC und eine Kratzschutzschicht 130 aus PET, wobei diese Schichten durch das vorangegangene Laminierverfahren miteinander verschmolzen sind, sodass die Schichten nicht mehr ohne weiteres separat erkennbar sind. Das Diffraktionselement hat dasselbe Format wie die PC-Lage und bedeckt diese daher vollständig. In die lichtbeugende Schicht ist lediglich in einem begrenzten Bereich ein lichtbeugendes Muster 125 in Form eines Volumenhologramms einbelichtet. Die Schichten des Diffraktionselements sind vorzugsweise transparent oder zumindest transluzent, damit die Druckbilder und das Volumenhologramm von der Oberseite 201 der ID-Karte 200 sichtbar sind. Die einzelnen Lagen und Schichten sind in der Darstellung durch strichlierte Linien angedeutet. Jedoch sind diese Grenzlinien in einem Querschnitt nur teilweise erkennbar und zwar allenfalls dann, wenn zwei unterschiedliche Materialien mit ausreichend unterschiedlichem Brechungsindex aneinandergrenzen. Dies ist jedenfalls im Falle der Polymerlage und der Trägerlage nicht der Fall. Allerdings sind die Druckschichten wegen deren Absorption im sichtbaren Spektralbereich gut erkennbar.

Zur Herstellung der ID-Karte 200 gemäß Fig. 1, 2 wird in erfindungsgemäßer Art und Weise ein Verfahren eingesetzt, bei dem die Herstellung des Volumenhologramms 125 und die Herstellung der Druckbilder 180 auf der Polymerlage 170 gleichzeitig stattfinden. Aus dem gemäß dem Verfahren hergestellten Polymerlaminat 100 in Form eines Einzelnutzens kann die ID-Karte beispielsweise durch Ausstanzen erhalten werden. Gegebenenfalls enthält die ID-Karte noch weitere Sicherheitsmerkmale, die dem Polymerlaminat noch hinzuzufügen sind, um die ID-Karte herzustellen.

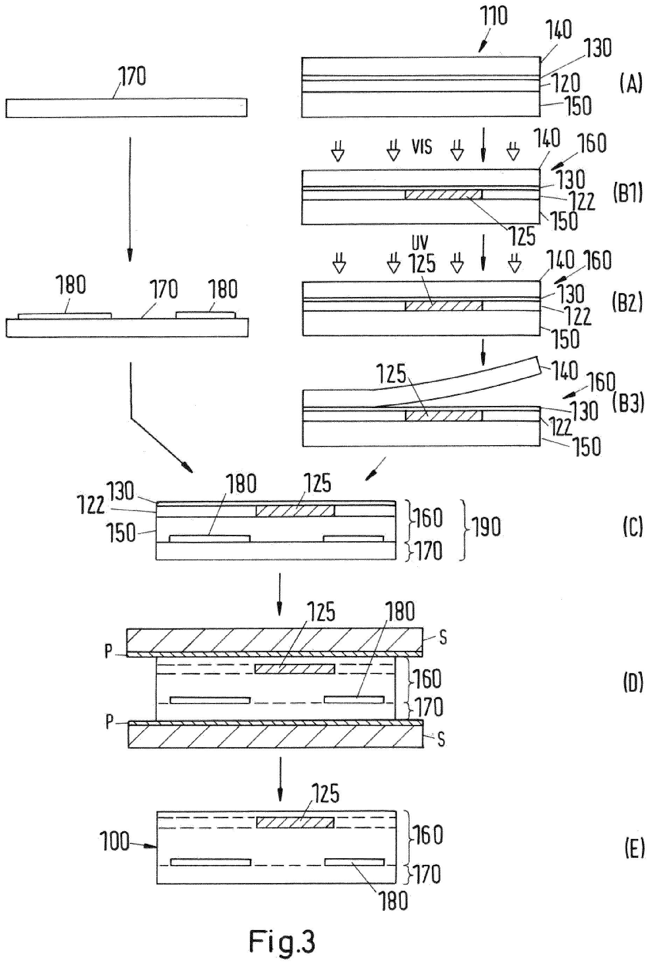

Das Verfahren zur Herstellung des Polymerlaminats 100 gemäß einer ersten Ausführungsform der vorliegenden Erfindung ist in Fig. 3 wiedergegeben:
In einem ersten Verfahrensschritt entsprechend dem anspruchsgemäßen Verfahrensschritt (a) werden zunächst ein Diffraktionselement-Material 110, vorliegend ein Volumenhologrammelement-Material, sowie eine Polymerlage 170, vorliegend eine PC-Lage, bereitgestellt (Fig. 3A). Das Volumenhologrammelement-Material ist durch eine Schichtenabfolge (von unten nach oben) aus einer Trägerfolie 150 aus PC, einer darauf aufgebrachten lichtempfindlichen Schicht 120 aus einem Photopolymer, einer darauf aufgebrachten Kratzschutzschicht 130 aus PET und einer darauf aufgebrachten und die Schichtenfolge in der Zeichnung nach oben abschließenden Schutzfolie 140 aus PE gebildet. Das Volumenhologrammelement-Material kann in einem Rollenformat vorliegen, sodass eine Vielzahl von Volumenhologrammenelementen 160 in der Rolle hergestellt werden können. Alternativ kann das Material in Form von blattförmigen Stücken eingesetzt werden, die beispielsweise jeweils Einzelnutzen entsprechen.

Das Volumenhologrammelement-Material 110 wird in einem zweiten Verfahrensschritt (entsprechend dem anspruchsgemäßen Verfahrensschritt (b) mit dem Volumenhologramm-Muster belichtet, wobei Laserstrahlung im sichtbaren Spektralbereich VIS (beispielsweise im Bereich von 440 nm bis 660 nm) eingesetzt wird (Fig. 3B1). Das erzeugte Beugungsmuster in dem Photopolymer beschränkt sich auf einen Bereich in der lichtempfindlichen Schicht 120, der dem vierten Feld 240 auf der ID-Karte 200 entspricht. Dabei entsteht eine lichtbeugende Schicht 122 mit einem einbelichteten Volumenhologramm 125. Anschließend wird die belichtete lichtempfindliche Schicht fixiert, wobei das in dem Material erzeugte Beugungsmuster UV-Strahlung UV ausgesetzt wird (Fig. 3B2). Dadurch wird erreicht, dass das Muster in dem Material nicht mehr veränderlich ist. Damit ist ein Volumenhologrammelement 160, das die Trägerschicht 150, die lichtbeugende Schicht 122, die Kratzschutzschicht 130 und die Schutzfolie 140 enthält, entstanden.

Parallel dazu werden die Druckbilder 180 auf der PC-Lage 170 erzeugt. Hierzu werden das Passbild und die alphanumerischen Datenwiedergaben in dem ersten Feld 210, zweiten Feld 220 und dritten Feld 230 mit einem Druckverfahren erzeugt. Es kann ein digitales Druckverfahren eingesetzt werden, beispielsweise ein Tintenstrahl-Druckverfahren. Alternativ sind natürlich auch andere Druckverfahren denkbar, beispielsweise ein Offsetverfahren.

Nach der Erstellung dieser individualisierenden Daten auf der PC-Lage 170 und nach Herstellung des Volumenhologrammelements 160 wird die sich auf der Oberseite des Volumenhologrammelements befindende Schutzfolie 140 abgezogen (Fig. 3B3).

Danach werden das Volumenhologrammelement 160 und die PC-Lage 170 sowie gegebenenfalls weitere Polymerlagen (letztere nicht dargestellt) zu einem Stapel zusammengetragen, wobei die PC-Lage an der Trägerfolie 150 des Volumenhologrammelements anliegt (Fig. 3C). Es entsteht ein Lagenstapel 190. Falls das Volumenhologrammelement Bestandteil eines Mehrfachnutzens, beispielsweise in Form eines Rollenmaterials, ist, wird der benötigte Einzelnutzen von dem Mehrfachnutzen abgeschnitten. Dieser Stapel kann dann zur vereinfachten Handhabung fixiert, beispielsweise eingeklemmt, werden, damit die Lagen nicht gegeneinander verrutschen.

Anschließend wird der Lagenstapel 190 zwischen zwei Pressblechen P angeordnet und zusammen mit den Pressblechen in eine Laminierpresse überführt (Fig. 3D). Dort wird er zwischen zwei beheizbaren Presstempeln S platziert. Die Presstempel sind dazu ausgelegt, den Stapel auf erhöhte Temperatur, beispielsweise 180 °C, aufzuheizen und dabei Druck auf den Stapel auszuüben, beispielweise 110 N/cm². Durch den angewendeten Druck und die erhöhte Temperatur verfließen die Materialien miteinander. Dabei verbinden sie sich fest miteinander. Die Grenzflächen zwischen den Materiallagen verschwinden dabei zum Teil. Es entsteht ein monolithischer Verbund zwischen den Lagen. Nach der Heißphase beim Laminieren wird eine Kaltphase angeschlossen, bei der der Druck noch erhöht wird, beispielsweise auf 450 N/cm², die Temperatur jedoch auf Raumtemperatur abgesenkt wird.

Schließlich wird das derart hergestellte Polymerlaminat 100 aus der Laminierpresse entnommen. Dieses Polymerlaminat ist in Fig. 3E gezeigt. Zur Herstellung einer ID-Karte 200 wird diese konturgenau aus dem Laminat herausgetrennt, beispielsweise mit einem Stanz-, Fräs- oder Schneidverfahren. Gegebenenfalls werden weitere Sicherheitsmerkmale hinzugefügt.

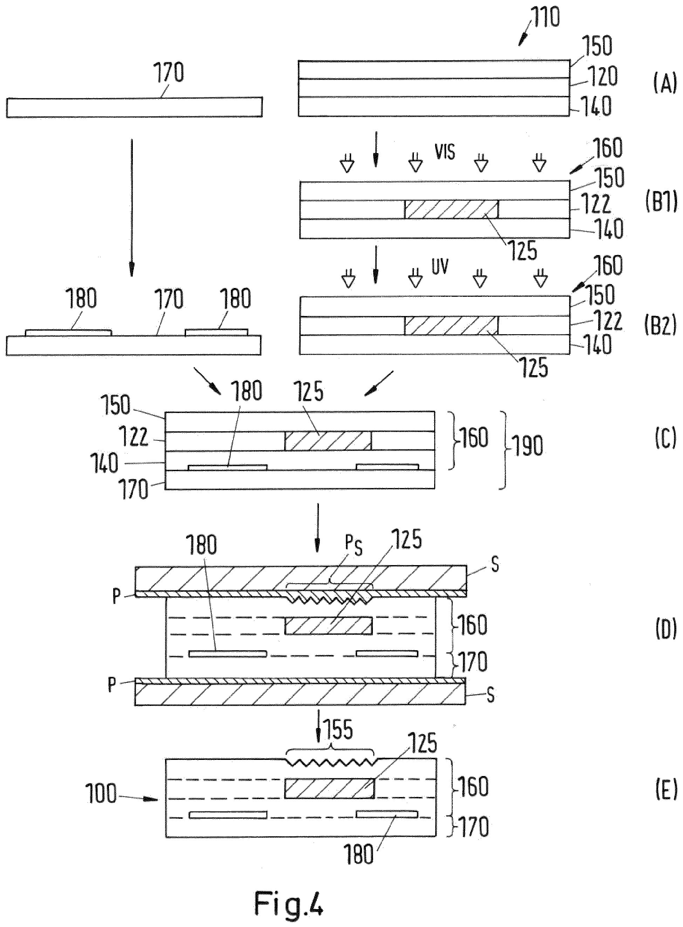

Eine zweite Ausführungsform des erfindungsgemäßen Verfahrens zur Herstellung eines Polymerlaminats 100 ist in Fig. 4 angegeben.

Dieses Verfahren unterscheidet sich von dem Verfahren gemäß der ersten Ausführungsform darin, dass das Volumenhologrammelement-Material 110 beispielsweise keine Kratzschutzschicht enthält. Außerdem wird die Schutzfolie 140 vor dem Laminierschritt (Verfahrensschritt (d)) von der lichtbeugenden Schicht 122 nicht abgezogen und verbleibt daher in dem Volumenhologrammelement 160. Ferner wird das Volumenhologrammelement mit der Trägerfolie 150 nach oben weisend mit der PC-Lage 170 zusammengetragen, d.h. in dem gebildeten Lagenstapel 190 liegt die PC-Lage an der Schutzfolie des Volumenhologrammelements an. Des Weiteren weist eines der Pressbleche P eine Prägestruktur P_{S} (vorliegend mit erhabenen Strukturen) auf, die in dem Material der Trägerfolie in dem Volumenhologrammelement eine Prägestruktur 155 (vorliegend Vertiefungen) erzeugt.

In einem ersten Verfahrensschritt werden das Volumenhologrammelement-Material 110 und eine PC-Lage 170 bereitgestellt (entsprechend Verfahrensschritt (a) des erfindungsgemäßen Verfahrens; Fig. 4A). Das Volumenhologrammelement-Material ist durch eine Schutzfolie 140 aus PET, eine darauf aufgebrachte lichtempfindliche Schicht 120 aus einem Photopolymer und eine darauf aufgebrachte Trägerfolie 150 aus PC gekennzeichnet.

Danach wird das Volumenhologrammelement-Material 110 mit dem Muster des Volumenhologramms belichtet, wobei Strahlung im sichtbaren Spektralbereich VIS eingesetzt wird (Fig. 4B1). Dabei werden aus der lichtempfindlichen Schicht 120 eine lichtbeugende Schicht 122 und aus dem Volumenhologrammelement-Material ein Volumenhologrammelement 160 gebildet. In der lichtbeugenden Schicht ist das Volumenhologramm 125 entstanden. Danach wird das erzeugte Beugungsmuster in dem Photopolymer mittels UV-Strahlung UV fixiert (Fig. 4B2), entsprechend Verfahrensschritt (b) des erfindungsgemäßen Verfahrens.

Parallel dazu wird ein Druckbild 180 mit personalisierenden Daten auf der PC-Lage 170 erzeugt.

Anschließend werden das Volumenhologrammelement 160 und die bedruckte PC-Lage 170 sowie gegebenenfalls weitere Polymerlagen (letztere nicht dargestellt) unter Bildung eines Lagenstapels 190 zusammengetragen (entsprechend Verfahrensschritt (c) des erfindungsgemäßen Verfahrens; Fig. 4C), wobei die Trägerfolie 150 des Volumenhologrammelements nach oben und die Schutzfolie 140 nach unten zur PC-Lage weisend angeordnet sind.

Danach wird der Lagenstapel 190 in eine Laminierpresse überführt, wobei er zwischen zwei Pressblechen P angeordnet und dieser Stapel zwischen Pressstempeln S der Laminierpresse platziert wird. In der Laminierpresse wird dem Stapel Wärme zugeführt, und der Stapel wird unter Druck, beispielweise 110 N/cm², versetzt, sodass die Lagen des Lagenstapels erweichen und sich miteinander verbinden (Fig. 4D). Dabei entsteht das Polymerlaminat 100 (entsprechend Verfahrensschritt (d) des erfindungsgemäßen Verfahrens). Das obere der beiden Pressbleche weist eine erhabene Struktur P_{S} auf, die sich beim Laminieren in die obere äußere Lage (Trägerfolie 150) des Volumenhologrammelements 160 in Form von Vertiefungen 155 einprägt. Damit werden mikrooptische Elemente erzeugt, beispielsweise ein Array von Mikroprismen. Schließlich wird das fertige Polymerlaminat 100 aus der Laminierpresse ausgeworfen. Das Polymerlaminat kann zu einer ID-Karte 200 oder einem anderen Wert- oder Sicherheitsprodukt weiterverarbeitet werden.

Bezüglich der Details der einzelnen Verfahrensschritte wird im Übrigen auf die Beschreibung von Fig. 3 verwiesen.

### Bezugszeichen:

- 100: Polymerlaminat
- 110: Diffraktionselement-Material, Volumenhologrammelement-Material
- 120: lichtempfindliche Schicht
- 122: lichtbeugende Schicht
- 125: lichtbeugendes Muster, Volumenhologramm
- 130: Kratzschutzschicht
- 140: Schutzfolie
- 150: Trägerfolie
- 155: Prägestruktur in Polymerlaminat, mikrooptische Elemente
- 160: Diffraktionselement, Volumenhologrammelement
- 170: Polymerlage, PC-Lage
- 180: Druckbild
- 190: Lagenstapel
- 200: ID-Karte, Wert- oder Sicherheitsprodukt, Wert- oder Sicherheitsdokument
- 201: Oberseite
- 202: Unterseite
- 210: erstes Feld
- 220: zweites Feld
- 230: drittes Feld
- 240: viertes Feld
- P: Pressblech
- P_{S}: Prägestruktur auf Pressblech
- S: Pressstempel
- UV: Strahlung im UV-Spektralbereich
- VIS: Strahlung im sichtbaren Spektralbereich

## Patentansprüche

1. Verfahren zum Herstellen eines mindestens ein Diffraktionselement (160) aufweisenden Polymerlaminats (100), umfassend folgende Verfahrensschritte:
(a) Bereitstellen eines Diffraktionselement-Materials (110), aufweisend eine Trägerfolie (150) und eine sich darauf befindende lichtempfindliche Schicht (120), sowie mindestens einer Polymerlage (170);
(b) Herstellen des mindestens einen Diffraktionselements (160) durch Erzeugen einer lichtbeugenden Schicht (122) aus der lichtempfindlichen Schicht (120), indem ein lichtbeugendes Muster (125) in der lichtempfindlichen Schicht (120) des mindestens einen Diffraktionselement-Materials (110) erzeugt wird;
(c) Zusammentragen des mindestens einen Diffraktionselements (160) und mindestens einer Polymerlage (170) zu einem Lagenstapel (190); und
(d) flächiges Verbinden des mindestens einen Diffraktionselements (160) und der mindestens einen Polymerlage (170) mit einem Laminierverfahren unter Ausbildung des Polymerlaminats (100),
**dadurch gekennzeichnet, dass**
entweder
Verfahrensschritt (c) das Anordnen des mindestens einen Diffraktionselements (160) an einer Außenseite des Lagenstapels (190) umfasst und Verfahrensschritt (c) das Anordnen der Trägerfolie (150) an der Seite der lichtbeugenden Schicht (122) des mindestens einen Diffraktionselements (160) in dem Lagenstapel (190), die der mindestens einen Polymerlage (170) gegenüberliegt, umfasst und dass sich an Verfahrensschritt (d) folgender Verfahrensschritt anschließt:
(e) Einprägen von mikrooptischen Elementen (155) in das Material der Trägerfolie (150).
oder
Verfahrensschritt (c) das zusätzliche Anordnen einer separaten Prägefolie an der Seite des Lagenstapels (190), an der sich das mindestens eine Diffraktionselement befindet, umfasst und sich an Verfahrensschritt (d) folgender Verfahrensschritt anschließt:
(e) Einprägen von mikrooptischen Elementen (155) in das Material der Prägefolie.

2. Verfahren nach Anspruch 1, **dadurch gekennzeichnet, dass** Verfahrensschritt (d) das Verbinden des mindestens einen Diffraktionselements (160) und der mindestens einen Polymerlage (170) miteinander ohne Anwendung eines zusätzlichen Klebermaterials umfasst.

3. Verfahren nach einem der vorstehenden Ansprüche, **dadurch gekennzeichnet, dass** das Diffraktionselement-Material (110) zusätzlich eine Kratzschutzschicht (130) aufweist, die auf der der Trägerfolie (150) gegenüber liegenden Seite der lichtempfindlichen Schicht (120) angeordnet ist.

4. Verfahren nach Anspruch 3, **dadurch gekennzeichnet, dass** die Verfahrensschritte (c) und (d) umfassen, dass die Kratzschutzschicht (130) als Bestandteil des herzustellenden Polymerlaminats (100) auf der lichtbeugenden Schicht (122) verbleibt.

5. Verfahren nach einem der vorstehenden Ansprüche, **dadurch gekennzeichnet, dass** Verfahrensschritt (c) das Anordnen der lichtbeugenden Schicht (122) an der Seite der Trägerfolie (150) des mindestens einen Diffraktionselements (160) in dem Lagenstapel (190), die der mindestens einen Polymerlage (170) gegenüberliegt, umfasst.

6. Verfahren nach einem der vorstehenden Ansprüche, **dadurch gekennzeichnet, dass** die Trägerfolie (150) mit Polycarbonat gebildet ist oder aus Polycarbonat besteht.

7. Verfahren nach einem der vorstehenden Ansprüche, **dadurch gekennzeichnet, dass** mindestens eine der mindestens einen Polymerlage (170) mit Polycarbonat gebildet ist oder aus Polycarbonat besteht.

8. Verfahren nach einem der vorstehenden Ansprüche, **dadurch gekennzeichnet, dass** das Diffraktionselement-Material (110) eine Schutzfolie (140) aufweist, die auf der der Trägerfolie (150) gegenüber liegenden Seite der lichtempfindlichen Schicht (120) angeordnet ist, wobei sich an Verfahrensschritt (b) folgender Verfahrensschritt anschließt: (b1) Abziehen der Schutzfolie (140) von der lichtempfindlichen Schicht (122).

9. Verfahren nach einem der vorstehenden Ansprüche, **dadurch gekennzeichnet, dass** mindestens eine der Polymerlagen (170) mit Daten versehen wird.

10. Verfahren nach Anspruch 9, **dadurch gekennzeichnet, dass** die Daten auf die mindestens eine der Polymerlagen (170) gleichzeitig mit der Herstellung des mindestens einen Diffraktionselements (160) aus dem Diffraktionselement-Material (110) aufgebracht werden.

11. Polymerlaminat (100) mit mindestens einem Diffraktionselement (160) hergestellt nach einem Verfahren gemäß einem der Ansprüche 1 bis 10, wobei das Polymerlaminat (100) eine von Klebermaterial freie Verbindung des mindestens einen Diffraktionselements (160) mit Polymerlagen (170) des Polymerlaminats (100) aufweist.

12. Verwendung des Polymerlaminats (100) nach Anspruch 11 zur Herstellung eines Wert- oder Sicherheitsprodukts (200).

## Claims

1. Method for producing a polymer laminate (100) comprising at least one diffraction element (160), comprising the following method steps:
(a) providing a diffraction element material (110), comprising a carrier film (150) and a light-sensitive layer (120), as well as at least one polymer layer (170);
(b) producing the at least one diffraction element (160) by creating a light-diffracting layer (122) from the light-sensitive layer (120), in that a light-diffraction pattern (125) is created in the light-sensitive layer (120) of the at least one diffraction element material (110);
(c) bringing the at least one diffraction element (160) and at least one polymer layer (170) together to form a stack of layers (190); and
(d) bonding the at least one diffraction element (160) and the at least one polymer layer (170) by a laminating process, thereby forming the polymer laminate (100),
**characterised in that**
either
method step (c) comprises the arrangement of the at least one diffraction element (160) on an outer side of the stack of layers (190), and method step (c) comprises the arrangement of the carrier film (150) at the side of the light-diffracting layer (122) of the at least one diffraction element (160) in the stack of layers (190), which is located opposite the at least one polymer layer (170), and that method step (d) is followed by the following method step:
(e) impressing of micro-optical elements (155) into the material of the carrier film (150)
or
method step (c) comprises the additional arrangement of a separate embossing film on the side of the stack of layers (190) at which the at least one diffraction element is located, and method step (d) is followed by the following method step:
(e) impressing of micro-optical elements (155) into the material of the embossing film.

2. Method according to claim 1, **characterised in that** method step (d) comprises the bonding of the at least one diffraction element (160) and of the at least one polymer layer (170) to one another without the use of an additional adhesive material.

3. Method according to any one of the preceding claims, **characterised in that** the diffraction element material (110) additionally comprises a scratch-protection layer (130), which is arranged on the side of the light-sensitive layer (120) opposite the carrier film (150).

4. Method according to claim 3, **characterised in that** the method steps (c) and (d) comprise the feature that the scratch-protection layer (130), as a constituent part of the polymer laminate (100) which is to be produced, remains on the light-diffraction layer (122).

5. Method according to any one of the preceding claims, **characterised in that** method step (c) comprises the arrangement of the light-diffraction layer (122) on the side of the carrier film (150) of the at least one diffraction element (160) in the stack of layers (190) which is opposite the at least one polymer layer (170).

6. Method according to any one of the preceding claims, **characterised in that** carrier film (150) is formed with polycarbonate or consists of polycarbonate.

7. Method according to any one of the preceding claims, **characterised in that** at least one of the at least one polymer layer (170) is formed with polycarbonate or consists of polycarbonate.

8. Method according to any one of the preceding claims, **characterised in that** the diffraction element material (110) comprises a protective film (140), which is arranged on the side of the light-sensitive layer (120) lying opposite the carrier film (150), wherein method step (b) is followed by the following method step:
(b1) Drawing the protective film (140) off the light-sensitive layer (122).

9. Method according to any one of the preceding claims, **characterised in that** at least one of the polymer layers (170) is provided with data.

10. Method according to any one of the preceding claims, **characterised in that** the data is applied onto at least one of the polymer layers (170) simultaneously with the producing of the at least one diffraction element (160) from the diffraction element material (110).

11. Polymer laminate (100) with at least one diffraction element (160) produced in accordance with a method in accordance with any one of claims 1 to 10, wherein the polymer laminate (100) comprises an adhesive material-free bond of the at least one diffraction element (160) with polymer layers (170) of the polymer laminate (100).

12. Use of the polymer laminate (100) in accordance with claim 11 for producing a value product or security product (200).

## Revendications

1. Procédé de fabrication d'un stratifié polymère (100) présentant au moins un élément de diffraction (160), comprenant des étapes de procédé suivantes :
(a) de fourniture d'un matériau d'élément de diffraction (110), présentant un film de support (150) et une couche photosensible (120) se trouvant dessus, ainsi qu'au moins une strate de polymère (170) ;
(b) de fabrication de l'au moins un élément de diffraction (160) en générant une couche diffractive (122) à partir de la couche photosensible (120) en ce qu'un motif diffractif (125) est généré dans la couche photosensible (120) de l'au moins un matériau d'élément de diffraction (110) ;
(c) de réunion de l'au moins un élément de diffraction (160) et d'au moins une strate de polymère (170) en un empilement de strates (190) ; et
(d) de liaison à plat de l'au moins un élément de diffraction (160) et de l'au moins une strate de polymère (170) avec un procédé de stratification en réalisant le stratifié polymère (100),
**caractérisé en ce que**
soit
l'étape de procédé (c) comprend l'agencement de l'au moins un élément de diffraction (160) au niveau d'un côté extérieur de l'empilement de strates (190) et l'étape de procédé (c) comprend l'agencement du film de support (150) au niveau d'un côté de la couche diffractive (122) de l'au moins un élément de diffraction (160) dans l'empilement de strates (190), qui fait face à l'au moins une strate de polymère (170) et que se raccorde à l'étape de procédé (d) l'étape de procédé suivante :
(e) d'incrustation d'éléments (155) micro-optiques dans le matériau du film de support (150),
soit
l'étape de procédé (c) comprend l'agencement supplémentaire d'un film d'estampage séparé au niveau du côté de l'empilement de strates (190), au niveau duquel se trouve l'au moins un élément de diffraction et se raccorde à l'étape de procédé (d) une étape de procédé suivante :
(e) d'incrustation d'éléments (155) micro-optiques dans le matériau du film d'estampage.

2. Procédé selon la revendication 1, **caractérisé en ce que** l'étape de procédé (d) comprend la liaison de l'au moins un élément de diffraction (160) et de l'au moins une strate de polymère (170) l'un à l'autre sans application d'un matériau adhésif supplémentaire.

3. Procédé selon l'une quelconque des revendications précédentes, **caractérisé en ce que** le matériau d'élément de diffraction (110) présente en supplément une couche de protection anti-égratignures (130), qui est disposée sur le côté, faisant face au film de support (150), de la couche photosensible (120).

4. Procédé selon la revendication 3, **caractérisé en ce que** les étapes de procédé (c) et (d) comprennent que la couche de protection anti-égratignures (130) reste sur la couche diffractive (122) en tant que constituant du stratifié polymère (100) à fabriquer.

5. Procédé selon l'une quelconque des revendications précédentes, **caractérisé en ce que** l'étape de procédé (c) comprend l'agencement de la couche diffractive (122) au niveau du côté du film de support (150) de l'au moins un élément de diffraction (160) dans l'empilement de strates (190), qui fait face à l'au moins une strate de polymère (170) .

6. Procédé selon l'une quelconque des revendications précédentes, **caractérisé en ce que** le film de support (150) est formé avec du polycarbonate ou est constitué de polycarbonate.

7. Procédé selon l'une quelconque des revendications précédentes, **caractérisé en ce qu'**au moins une de l'au moins une strate de polymère (170) est formée avec du polycarbonate ou est constituée de polycarbonate.

8. Procédé selon l'une quelconque des revendications précédentes, **caractérisé en ce que** le matériau d'élément de diffraction (110) présente un film de protection (140), qui est disposé sur le côté, faisant face au film de support (150), de la couche photosensible (120), dans lequel se raccorde à l'étape de procédé (b) une étape de procédé suivante :
(b1) de retrait du film de protection (140) de la couche photosensible (122).

9. Procédé selon l'une quelconque des revendications précédentes, **caractérisé en ce qu'**au moins une des strates de polymère (170) est pourvue de données.

10. Procédé selon la revendication 9, **caractérisé en ce que** les données sont appliquées sur l'au moins une des strates de polymère (170) simultanément avec la fabrication de l'au moins un élément de diffraction (160) à partir du matériau d'élément de diffraction (110).

11. Stratifié polymère (100) avec au moins un élément de diffraction (160) fabriqué selon un procédé selon l'une quelconque des revendications 1 à 10, dans lequel le stratifié polymère (100) présente une liaison sans matériau adhésif de l'au moins un élément de diffraction (160) à des strates de polymère (170) du stratifié polymère (100) .

12. Utilisation du stratifié polymère (100) selon la revendication 11 pour fabriquer un produit de valeur ou de sécurité (200).
